# EUROPÄISCHE PATENTSCHRIFT

(11) **EP 1 366 272 B1**
(45) Veröffentlichungstag und Bekanntmachung des Hinweises auf die Patenterteilung: **10.05.2006**
(21) Anmeldenummer: 02726137.9
(22) Anmeldetag: 05.03.2002
(51) Int. Cl.: F01M 13/00

(54) **EINRICHTUNG FÜR DIE ENTLÜFTUNG DES KURBELGEHÄUSES EINER BRENNKRAFTMASCHINE**
DEVICE FOR THE VENTILATION OF THE CRANKCASE OF AN INTERNAL COMBUSTION ENGINE
DISPOSITIF POUR LE DEGAZAGE DU CARTER-CYLINDRES D'UN MOTEUR A COMBUSTION INTERNE

(30) Priorität: 07.03.2001 DE 20103874 U; 27.10.2001 DE 10153120
(43) Veröffentlichungstag der Anmeldung: 03.12.2003
(73) Patentinhaber: Hengst GmbH & Co. KG, 48147 Münster (DE)
(72) Erfinder: AHLBORN, Stephan, 48308 Senden (DE); MAY, Thomas, 48565 Steinfurt (DE); PIETSCHNER, Sieghard, 48268 Greven (DE)
(74) Vertreter: Linnemann, Winfried
(86) Internationale Anmeldenummer: PCT/EP2002/002363
(87) Internationale Veröffentlichungsnummer: WO 2002/070871

(56) Entgegenhaltungen:
- DE-A- 3 604 090
- DE-A- 10 024 769
- US-A- 5 429 101
- US-A- 6 148 807
- US-B1- 6 279 555

## Beschreibung

Die vorliegende Erfindung betrifft eine Einrichtung für die Entlüftung des Kurbelgehäuses einer Brennkraftmaschine, mit einer vom Kurbelgehäuse zu einem Saugrohr der Brennkraftmaschine führenden Entlüftungsleitung, in deren Verlauf ein Ölnebelabscheider angeordnet ist, wobei im Verlauf der Entlüftungsleitung eine Pumpeinrichtung vorgesehen ist, mit der im Kurbelgehäuse ein Unterdruck gegenüber dem Umgebungsluftdruck erzeugbar ist.

Allgemein besteht die Funktion einer solchen Einrichtung darin, einen aus technischen und gesetzlichen Gründen erforderlichen Unterdruck im Kurbelgehäuse der Brennkraftmaschine aufrecht zu erhalten, indem das Kurbelgehäuse entlüftet wird, wozu Gase aus dem Kurbelgehäuse, insbesondere Blow-By-Gase aus den Brennräumen der Brennkraftmaschine, zum Saugrohr der Brennkraftmaschine geführt werden. Im Kurbelgehäuse-Entlüftungsgas mitgeführte Ölanteile werden im Ölnebelabscheider abgetrennt; das abgetrennte Öl wird vorzugsweise wieder dem Schmierölkreislauf der Brennkraftmaschine zugeführt. Das vom Öl befreite Gas gelangt in das Ansaugrohr der Brennkraftmaschine und durchläuft dann die in der Maschine stattfindende Verbrennung.

Eine konkrete Einrichtung der vorstehend genannten Art ist aus der DE-A-36 04 090 bekannt. Diese Einrichtung weist einen Ölabscheider und eine Pumpeinrichtung, die nicht leistungsgeregelt ist und mit der im Kurbelgehäuse ein Unterdruck erzeugt wird, auf. Ein atmosphärisch druckgeregelter Ölabscheider sorgt bei dieser Einrichtung dafür, daß der Kurbelgehäuseunterdruck nicht zu groß werden kann.

Diese bekannte Einrichtung ist speziell für eine aufgeladene Brennkraftmaschine ausgelegt und daher nicht universell verwendbar. Als nachteilig ist auch anzusehen, daß der Ladeluftleitung zeitweise relativ viel Frischluft zusammen mit dem Kurbelgehäuseentlüftungsgas zugeführt wird, was die Gemischzusammensetzung stören kann.

Für die vorliegende Erfindung stellt sich deshalb die Aufgabe, eine Einrichtung der eingangs genannten Art zu schaffen, die die dargelegten Nachteile vermeidet und die sowohl an nicht aufgeladenen als auch an aufgeladenen Brennkraftmaschinen einsetzbar ist, wobei unter allen auftretenden Betriebszuständen der Brennkraftmaschine in deren Kurbelgehäuse ein Unterdruck gegenüber dem Umgebungsluftdruck in einem gewünschten Druckbereich aufrecht erhalten wird und wobei gleichzeitig ein hoher Wirkungsgrad des Ölnebelabscheiders gewährleistet ist.

Die Lösung dieser Aufgabe gelingt erfindungsgemäß mit einer Einrichtung der eingangs genannten Art, die dadurch gekennzeichnet ist, daß aus der Entlüftungsleitung hinter der Pumpeinrichtung eine Bypassleitung mit regelbarem Durchlaß zum Kurbelgehäuse geführt ist.

Bei der erfindungsgemäßen Einrichtung sorgt vorteilhaft die Pumpeinrichtung dafür, daß stets ein gewünschter Unterdruck im Kurbelgehäuse der Brennkraftmaschine besteht, wobei der Unterdruck auch in solchen Betriebszuständen der Brennkraftmaschine erhalten bleibt, bei denen allein über das Saugrohr der entsprechende Unterdruck nicht erzeugt werden kann. Zugleich sorgt die Pumpeinrichtung für einen ausreichend großen Volumenstrom am Kurbelgehäuse-Entlüftungsgas durch den Ölnebelabscheider, so daß dieser in jedem Betriebszustand der Brennkraftmaschine einen hohen Wirkungsgrad hat. Diese Einrichtung kann mit einer in ihrer Leistung ungeregelten Pumpeinrichtung betrieben werden und erfordert deshalb technisch einen relativ geringen Aufwand, so daß sie kostengünstig herstellbar ist. Unabhängig davon, ob die Pumpeinrichtung selbst in ihrer Leistung regelbar ist oder nicht, wird auf jeden Fall gewährleistet, daß im Kurbelgehäuse kein zu großer Unterdruck entsteht. Hierfür sorgt die Bypassleitung mit regelbarem Durchlaß, durch die bei Bedarf Kurbelgehäuseentlüftungsgas von der Druckseite der Pumpeinrichtung zurück in das Kurbelgehäuse geführt wird. Eine unerwünschte Einleitung von Frischluft in den Ansaugtrakt der Brennkraftmaschine wird so vermieden.

Zur Realisierung des zuvor erwähnten regelbaren Durchlasses der Bypassleitung ist bevorzugt in dieser Bypassleitung ein Regelventil angeordnet, das nach Maßgabe des Drucks im Kurbelgehäuse verstellbar ist. Dieses Regelventil kann zur Begrenzung des Unterdrucks im Kurbelgehäuse sowohl nach unten als auch nach oben eingesetzt werden, so daß die Einhaltung eines vorgegebenen Unterdruck-Bereichs im Kurbelgehäuse gewährleistet ist.

Um die Entlüftung des Kurbelgehäuses und die Ölnebelabscheidung aus dem Kurbelgehäuse-Entlüftungsgas zu optimieren, wird vorgeschlagen, daß das Regelventil zusätzlich nach Maßgabe der Kurbelwellendrehzahl der Brennkraftmaschine und nach Maßgabe der Stellung einer ggf. im Saugrohr vorhandenen Drosselklappe verstellbar ist.

Bei Otto-Motoren ist es für eine lange Motor-Lebensdauer wichtig, als Kondensat in das Schmieröl in der Ölwanne des Kurbelgehäuses gelangten Kraftstoff schnell und vollständig von dort abzuführen, damit es nicht zu einer Schlammbildung mit daraus resultierenden Schäden am Motor kommt. Für eine solche Brennkraftmaschine, bei der im Saugrohr eine Drosselklappe angeordnet ist, schlägt die Erfindung eine Ausführung der Einrichtung vor, bei der vom Saugrohr vor der Drosselklappe eine in das Kurbelgehäuse führende Belüftungsleitung mit einem Rückschlagventil abgeht. Durch diese Belüftungsleitung kann Frischluft in das Kurbelgehäuse eingeleitet werden und nach Aufnahme von Kraftstoffdämpfen zusammen mit dem übrigen Kurbelgehäuse-Entlüftungsgas von dort abgezogen werden.

In weiterer Ausgestaltung schlägt die Erfindung vor, daß die Entlüftungsleitung vor der Drosselklappe in das Saugrohr mündet und daß von der Entlüftungsleitung zwischen dem Ölnebelabscheider und der Pumpeinrichtung eine Zweigleitung mit einem Regelventil in ihrem Verlauf abgeht, die hinter der Drosselklappe in das Saugrohr mündet. Über diese Zweigleitung kann die Entlüftung des Kurbelgehäuses erfolgen, solange im Saugrohr ein ausreichender Unterdruck vorliegt. Nur in den Betriebszuständen, in denen der Unterdruck im Saugrohr für eine Kurbelgehäuse-Entlüftung nicht ausreicht, muß die Entlüftung mit Hilfe der Pumpeinrichtung erfolgen.

Zweckmäßig ist das in der Zweigleitung angeordnete Regelventil nach Maßgabe des Drucks im Kurbelgehäuse verstellbar, um im Kurbelgehäuse den Unterdruck innerhalb vorgebbarer Grenzen zu halten.

Zur Optimierung der Kurbelgehäuse-Entlüftung und Ölnebelabscheidung aus dem Entlüftungsgas kann das Regelventil in der Zweigleitung zusätzlich nach Maßgabe der Kurbelwellendrehzahl der Brennkraftmaschine und nach Maßgabe der Stellung der Drosselklappe verstellbar sein.

In bestimmten Betriebszuständen einer Brennkraftmaschine ist es ungünstig, dem Kurbelgehäuse Frischluft zuzuführen, insbesondere im Leerlauf der Brennkraftmaschine, weil es dann durch die zugeführte Frischluft zu einer Falschluft-Zuführung um die Drosselklappe herum kommen kann, die das Leerlaufverhalten der Brennkraftmaschine stört. Um diesem Problem abzuhelfen, schlägt die Erfindung vor, daß in der Belüftungsleitung zusätzlich zu dem Rückschlagventil ein mit diesem kombiniertes oder separates, fernbetätigbares Absperrventil angeordnet ist.

Zweckmäßig ist dieses Absperrventil in der Belüftungsleitung nach Maßgabe der Kurbelwellendrehzahl der Brennkraftmaschine verstellbar, insbesondere bei Leerlaufdrehzahl in Schließstellung bringbar. Damit wird im Leerlauf der Brennkraftmaschine die Zuführung von Frischluft über die Belüftungsleitung an der geschlossenen Drosselklappe vorbei in das Ansaugrohr ausgeschlossen, so daß Störungen des Leerlaufverhaltens vermieden werden.

Zusätzlich kann vorgesehen sein, daß von der Entlüftungsleitung hinter der Pumpeinrichtung über ein nach Maßgabe der Drosselklappenstellung oder nach Maßgabe des Saugrohrdrucks vor der Drosselklappe umschaltbares Abzweigventil eine die Bypassleitung bildende Rückführleitung zum Kurbelgehäuse geführt ist. Über diese Rückführleitung kann Kurbelgehäuse-Entlüftungsgas in das Kurbelgehäuse zurückgeführt werden, wenn das Saugrohr nicht in der Lage ist, das von der Pumpeinrichtung gelieferte Gas aufzunehmen. Auf diese Weise wird sicher vermieden, daß Kurbelgehäuse-Entlüftungsgas entgegen der vorgesehenen Strömungsrichtung durch das Saugrohr und den Luftfilter in die Umgebung gelangt.

Weiter ist erfindungsgemäß bevorzugt vorgesehen, daß die Pumpeinrichtung zwischen dem Ölnebelabscheider und der Einmündung der Entlüftungsleitung in das Saugrohr angeordnet ist. Durch diese Anordnung der Pumpeinrichtung wird gewährleistet, daß der Ölnebel schon vor dem Durchlaufen der Gase durch die Pumpeinrichtung abgeschieden ist, so daß die Pumpeinrichtung nicht durch Ölnebel verschmutzt und in ihrer Funktion beeinträchtigt werden kann.

Weiterhin ist bevorzugt die Pumpeinrichtung eine Saugpumpe oder ein Injektor. Mit beiden Pumpeinrichtungen lassen sich die gewünschten Wirkungen, nämlich die Erzeugung eines Unterdrucks im Kurbelgehäuse und die Förderung der Kurbelgehäuse-Entlüftungsgase zum Saugrohr, sicher erreichen.

Eine weitere Ausgestaltung der Einrichtung schlägt vor, daß die die Pumpeinrichtung bildende Saugpumpe ein Radialgebläse oder ein Seitenkanalverdichter mit einem von der Brennkraftmaschine abgeleiteten mechanischen Antrieb oder mit einem Elektromotor als Antrieb ist. Wegen der nur geringen erforderlichen Pumpleistung kann die so ausgebildete Saugpumpe sehr kompakt sein, wodurch wenig Bauraum beansprucht wird. Bei Ausführung der Saugpumpe mit einem von der Brennkraftmaschine abgeleiteten mechanischen Antrieb ist die Saugpumpe mit einer Drehzahl antreibbar, die in einem festen Verhältnis zur jeweiligen Kurbelwellendrehzahl der Brennkraftmaschine steht. Die Regelung des Unterdrucks im Kurbelgehäuse erfolgt über entsprechende Regelventile, wie weiter oben schon erläutert. Bei einem Elektromotor als Antrieb der Saugpumpe besteht bezüglich der Unterdruckregelung eine größere Freiheit.

Für die Ausführung der Einrichtung mit einem die Saugpumpe antreibenden Elektromotor ist bevorzugt dem Elektromotor ein elektrischer Schalter oder Spannungsregler vorgeschaltet, der nach Maßgabe des Kurbelgehäusedrucks verstellbar ist. Hierdurch wird erreicht, daß die Saugpumpe und der diese antreibende Elektromotor nur dann laufen, wenn tatsächlich eine Pumpleistung erforderlich ist, so daß eine geringere Beanspruchung von Saugpumpe und Antriebsmotor erreicht wird.

Für die Ausführungen der Einrichtung, bei denen ein Injektor die Pumpeinrichtung bildet, ist vorgesehen, daß der Injektor mit Druckluft von der Druckseite eines im Verlauf des Saugrohrs angeordneten Turboladers der mit der Einrichtung ausgestatteten Brennkraftmaschine oder mit Druckluft aus einem Druckluftnetz eines mit der Einrichtung ausgestatteten Kraftfahrzeugs betreibbar ist. Der Injektor als Pumpeinrichtung bietet insbesondere den Vorteil, daß er keine beweglichen Teile aufweist und somit eine praktisch unbegrenzte Lebensdauer und absolute Wartungsfreiheit aufweist. Da für den Betrieb des Injektors Druckluft erforderlich ist, ist die Verwendung eines Injektors als Pumpeinrichtung insbesondere in solchen Einrichtungen sinnvoll, die an Brennkraftmaschinen oder in Kraftfahrzeugen verwendet werden, wo Druckluft ohnehin zur Verfügung steht, z.B. mittels des erwähnten Turboladers oder des Druckluftnetzes, das bei Nutzfahrzeugen immer vorhanden ist.

Um den Injektor bedarfsgerecht betreiben zu können, ist bevorzugt vorgesehen, daß in eine Druckluftzuleitung zum Injektor ein Regelventil eingeschaltet ist, das nach Maßgabe des Kurbelgehäusedrucks verstellbar ist. Das Regelventil sorgt dann dafür, daß der Injektor jeweils nur dann eine Pumpleistung erzeugt, wenn dies erforderlich ist, um im Kurbelgehäuse den Unterdruck in einem vorgebbaren Bereich zu halten.

Eine alternative Möglichkeit zur Regelung der effektiven Leistung der Pumpeinrichtung besteht darin, daß mit der Entlüftungsleitung ein die Pumpeinrichtung kurzschließender Umgehungskanal mit einem Regelventil verbunden ist, das nach Maßgabe des Kurbelgehäusedrucks verstellbar ist. Auf diese Weise kann bei Bedarf eine Kreislaufförderung des Entlüftungsgases durch die Pumpeinrichtung und den zugehörigen Umgehungskanal erfolgen, wodurch die effektive Leistung der Pumpeinrichtung im Hinblick auf das aus dem Kurbelgehäuse in das Saugrohr geförderte Kurbelgehäuse-Entlüftungsgas in gewünschter Weise regelbar ist. Dabei wird die effektive Leistung der Pumpeinrichtung um so kleiner, je weiter das Regelventil geöffnet ist, und umgekehrt.

Um für den Betrieb der Einrichtung möglichst wenig eigene elektrische und elektronische Komponenten einsetzen zu müssen, schlägt die Erfindung schließlich bevorzugt vor, daß die verstellbaren und schaltbaren Komponenten der Einrichtung, d.h. insbesondere deren Ventile, durch eine zur Brennkraftmaschine gehörende, vorhandene Motorelektrik oder -elektronik betätigbar und überwachbar sind. Bei modernen Brennkraftmaschinen ist generell eine Motorelektronik zur Steuerung und Regelung des Betriebs der Brennkraftmaschine vorhanden, die durch geringfügige Erweiterung ihrer Programmierung und ihrer Ein- und Ausgänge für die erfindungsgemäße Einrichtung mit genutzt werden kann.

Ausführungsbeispiele der Erfindung werden im folgenden anhand einer Zeichnung erläutert. Die Figuren der Zeichnung zeigen:
- Figur 1: eine Einrichtung für die Entlüftung und gleichzeitige Belüftung des Kurbelgehäuses einer Brennkraftmaschine, vorzugsweise eines Otto-Motors, in einer schematischen Darstellung in einer ersten Ausführung, und
- Figur 2: die Einrichtung in einer zweiten Ausführung in gleicher Darstellungsweise.

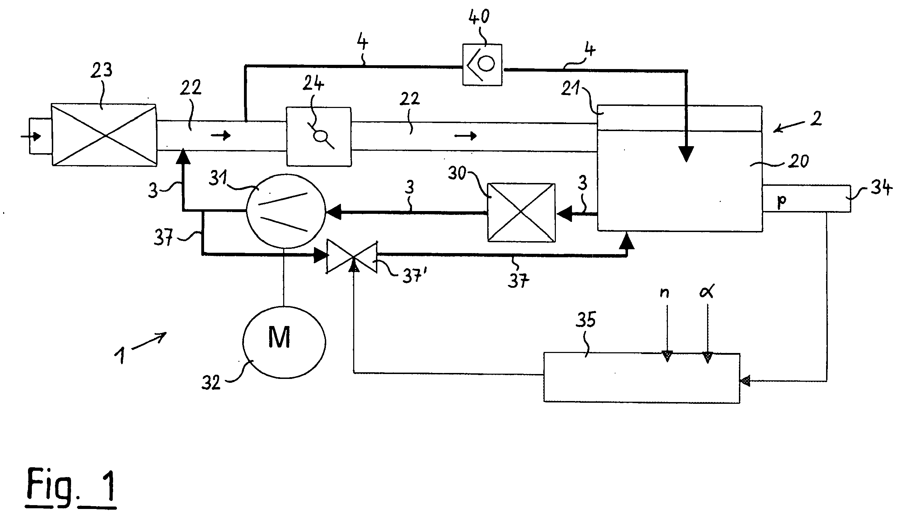

Die Figur 1 der Zeichnung zeigt ganz links einen Luftfilter 23, von dem aus ein Saugrohr 22 zur Brennkraftmaschine 2 führt, die in der Figur 1 rechts angedeutet ist. Im Verlauf des Saugrohrs 22 ist eine Drosselklappe 24 angeordnet.

Vom Kurbelgehäuse 20, das einen Teil der Brennkraftmaschine 2 bildet, führt eine Kurbelgehäuse-Entlüftungsleitung 3 zum Saugrohr 22 und mündet vor der Drosselklappe 24 in dieses ein. Hier und im folgenden beziehen sich die Angeben "vor" und "hinter" wie üblich auf die jeweilige Strömungsrichtung.

Im Verlauf der Entlüftungsleitung 3 ist in Strömungsrichtung der Kurbelgehäuse-Entlüftungsgase gesehen zunächst ein Ölnebelabscheider 30 angeordnet. Dieser ist vorzugsweise ein nach dem Trägheitsprinzip arbeitender Abscheider, z.B. ein Zyklon. Im Abscheider 30 aus dem Entlüftungsgas abgeschiedene Ölanteile können über eine hier nicht eingezeichnete Leitung wieder zum Ölsumpf im Kurbelgehäuse 20 zurückgeführt werden.

Die vom Ölnebel befreiten Gase gelangen weiter durch die Entlüftungsleitung 3 zu einer Pumpeinrichtung 31, hier eine mittels eines Elektromotors 32 antreibbare Saugpumpe, deren Ausgang mit dem Saugrohr 22 vor der Drosselklappe 24 verbunden ist. Alternativ kann die Pumpeinrichtung auch durch einen Injektor gebildet sein. Im hier dargestellten Ausführungsbeispiel hat die Pumpeinrichtung 31 einen permanenten Antrieb, also eine konstante Förderleistung. Um die Menge des zum Saugrohr 22 gelangenden Kurbelgehäuse-Entlüftungsgases bedarfsweise beeinflussen zu können, ist mit dem Ausgang der Pumpeinrichtung 31 weiterhin eine Bypassleitung 37 verbunden, die zum Kurbelgehäuse 20 zurückführt. Die Bypassleitung 37 besitzt einen veränderbaren Durchlaß, der hier durch ein Regelventil 37' verstellbar ist.

Die Verstellung des in der Bypassleitung 37 angeordneten Regelventils 37' erfolgt hier über einen Regler 35, der zweckmäßig Teil einer an der zugehörigen Brennkraftmaschine 2 ohnehin vorhandenen Motorelektrik oder -elektronik ist, die über entsprechende Sensoren Steuersignale erhält, wie über den Drucksensor 34 den Druck p im Inneren des Kurbelgehäuses 20, die Kurbelwellendrehzahl n der Brennkraftmaschine und die Stellung α der Drosselklappe 24. Aus diesen Meßwerten berechnet der Regler 35 nach einem vorgebbaren Kennfeld oder Programm Steuersignale für das in der Bypassleitung angeordnete Regelventil 37' und verstellt dessen Durchlaßquerschnitt entsprechend den jeweiligen Betriebszuständen der Brennkraftmaschine 2 so, daß der Unterdruck im Kurbelgehäuse 20 sich nur innerhalb vorgebbarer Grenzwerte bewegt.

Zur Belüftung des Kurbelgehäuses 20 ist eine Belüftungsleitung 4 vorgesehen, die aus dem Saugrohr 22 vor der Drosselklappe 24 abzweigt und die in das Kurbelgehäuse 20 mündet. Im Verlauf der Belüftungsleitung 4 ist ein Rückschlagventil 40 angeordnet, das eine Strömung nur in Richtung vom Saugrohr 22 zum Kurbelgehäuse 20 zuläßt.

Im Betrieb dieser Einrichtung 1 wird das Regelventil 37' in der Bypassleitung 37 so verstellt, daß im Kurbelgehäuse 20 stets ein Unterdruck in einer vorgegebenen Größe eingehalten wird. Diese Ausführung der Einrichtung 1 hat dabei den Vorteil, daß sie relativ einfach aufgebaut ist; auf der anderen Seite unterliegt die Pumpeinrichtung 31 durch ihren ständigen Betrieb einem erhöhten Verschleiß, so daß hier eine entsprechend langlebige Konstruktion gewählt werden muß. Für die Funktion dieser Einrichtung 1 spielt es keine Rolle, ob im Saugrohr 22 eine Drosselklappe 24 angeordnet ist oder nicht; damit ist diese Ausführung der Einrichtung 1 für alle Otto-Motoren mit oder ohne Drosselklappe 24 geeignet. Auch für aufgeladene Motoren eignet sich diese Einrichtung 1. Neben der Einhaltung des gewünschten Unterdrucks im Kurbelgehäuse 20 sorgt die Pumpeinrichtung 31 für einen ständig ausreichend hohen Volumenstrom durch den Ölnebelabscheider 30, so daß dieser seinen optimalen Wirkungsgrad ständig erreicht.

Eine Zuleitung von Falschluft zu den Brennräumen 21 der Brennkraftmaschine 2 um die Drosselklappe 24 herum ist bei dieser Einrichtung 1 ausgeschlossen, was Leerlaufstörungen ausschließt.

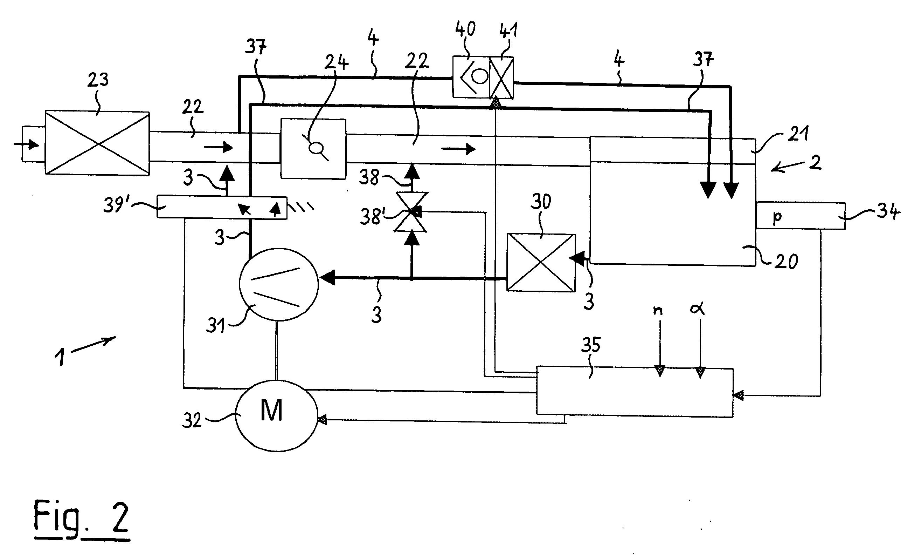

Die zweite Ausführung der Einrichtung 1, die in Figur 2 der Zeichnung dargestellt ist, unterscheidet sich in mehreren Punkten von der Einrichtung 1 gemäß Figur 1.

Die Bypassleitung 37, die bei der ersten Ausführung der Einrichtung 1 hinter der Pumpeinrichtung 31 unmittelbar an die Entlüftungsleitung 3 angeschlossen ist, ist nun über ein verstellbares Abzweigventil 39', das hinter der Pumpeinrichtung 31 in den zum Saugrohr 22 führenden Abschnitt der Entlüftungsleitung 3 eingeschaltet ist, an letztere angebunden. Vom Abzweigausgang des Abzweigventils 39' führt die Bypassleitung 37 zum Kurbelgehäuse 20.

Weiterhin ist bei dem Ausführungsbeispiel nach Figur 2 hinter dem Ölnebelabscheider 30 von der zur Pumpeinrichtung 31 verlaufenden Entlüftungsleitung 3 eine Zweigleitung 38 abgezweigt, die über ein Regelventil 38' hinter der Drosselklappe 24 in das Saugrohr 22 mündet.

Ein weiterer Unterschied zum ersten Ausführungsbeispiel besteht darin, daß nun das Rückschlagventil 40 in der Belüftungsleitung 4 mit einem fernbetätigbaren Absperrventil 41 kombiniert ist.

Außerdem ist unterschiedlich zum ersten Ausführungsbeispiel, daß die Pumpeinrichtung 31 hier in ihrer Leistung geregelt werden kann. Zu diesem Zweck ist der Regler 35 hier auch als elektrischer Schalter oder Spannungsregler ausgeführt, der nach Maßgabe des Drucks p im Kurbelgehäuse, der Kurbelwellendrehzahl n und der Drosselklappenstellung a verstellt wird. Der Regler 35 wirkt regelnd auf die Leistung des Antriebsmotors 32 ein und regelt darüber die Leistung der Pumpeinrichtung 31, wobei zumindest ein Ein- und Ausschalten erfolgen kann.

Das Regelventil 38' in der Zweigleitung 38 vom Ausgang des Ölnebelabscheiders 30 zum Saugrohr 22 hinter der Drosselklappe 24 wird von dem Regler 35 nach Maßgabe des Drucks p im Kurbelgehäuse, der Kurbelwellendrehzahl n und der Drosselklappenstellung a verstellt. Dabei wird das Ventil 38' in der Weise in seiner Stellung geregelt, daß bei einem ausreichenden Unterdruck im Saugrohr 22 das Ventil 38' in Öffnungsstellung steht. Die Kurbelgehäuse-Entlüftung erfolgt dann im wesentlichen über den im Saugrohr 22 herrschenden Unterdruck. Wenn der Unterdruck im Saugrohr 22 für die Einhaltung eines ausreichenden Unterdrucks im Kurbelgehäuse 20 nicht ausreicht, wird das Regelventil 38' geschlossen und die Einstellung des Unterdrucks im Kurbelgehäuse 20 erfolgt über die Pumpeinrichtung 31.

Im Leerlauf der Brennkraftmaschine 2 wird das Absperrventil 41 in der Belüftungsleitung 4 geschlossen, so daß dann in diesem Betriebszustand der Brennkraftmaschine 2 die Führung von Falschluft an der Drosselklappe 24 vorbei verhindert wird.

In ihrem Grundbetrieb arbeitet die Einrichtung 1 gemäß Figur 2 so wie die Einrichtung 1 gemäß Figur 1. Dabei kann bei der Einrichtung 1 gemäß Figur 2 der Ausgang der Pumpeinrichtung 31 statt vor der Drosselklappe 24 zum Saugrohr 22 alternativ über das Abzweigventil 39' und die Bypassleitung 37 zum Kurbelgehäuse 20 durchverbunden werden. Hiermit besteht die Möglichkeit, daß in dem Fall, daß die von der Pumpeinrichtung 31 abgegebene Volumenmenge an Kurbelgehäuse-Entlüftungsgas nicht vom Saugrohr 22 vor der Drosselklappe 24 aufgenommen werden kann, das Kurbelgehäuse-Entlüftungsgas im Kreislauf zwischen Kurbelgehäuse 20 und Pumpeinrichtung 31 gefördert wird. Dieser Fall kann durch eine Druckmessung im Saugrohr 22 oder durch Auswertung der ohnehin erfaßten Parameter, wie Drosselklappenstellung α, Druck p im Kurbelgehäuse und Kurbelwellendrehzahl n festgestellt werden. Es wird so verhindert, daß entgegen der im Saugrohr 22 vorgesehenen Strömungsrichtung Kurbelgehäuse-Entlüftungsgas durch den Luftfilter 23 in die Umgebung gelangen kann. Da Betriebszustände der Brennkraftmaschine 2, in denen diese Arbeitsweise der Einrichtung 1 auftritt, nur selten sind, stellt diese zusätzliche Betriebsweise keine merkliche Zusatzbelastung dar.

Mittels Verstellung der Leistung der Pumpeinrichtung 31 kann der Unterdruck im Kurbelgehäuse 20 passend eingestellt werden. Solange im Saugrohr 22 ein ausreichender Unterdruck herrscht, kann die Pumpeinrichtung 31 sogar abgeschaltet werden.

Auch bei dieser zweiten Ausführung der Einrichtung 1 wird in allen Betriebszuständen der Brennkraftmaschine 2 der benötigte Unterdruck im Kurbelgehäuse 20 aufrechterhalten. Gleichzeitig wird eine gute Ölabscheidung im Ölnebelabscheider 30 gewährleistet, weil in diesem stets ein ausreichender Volumenstrom an Kurbelgehäuse-Entlüftungsgas erhalten bleibt. Außerdem wird ein problemloser Leerlauf der Brennkraftmaschine 2 ohne Störungen durch Falschluft gewährleistet.

## Patentansprüche

1. Einrichtung (1) für die Entlüftung des Kurbelgehäuses (20) einer Brennkraftmaschine (2), mit einer vom Kurbelgehäuse (20) zu einem Saugrohr (22) der Brennkraftmaschine (2) führenden Entlüftungsleitung (3), in deren Verlauf ein Ölnebelabscheider (30) angeordnet ist, wobei im Verlauf der Entlüftungsleitung (3) eine Pumpeinrichtung (31) vorgesehen ist, mit der im Kurbelgehäuse (20) ein Unterdruck gegenüber dem Umgebungsluftdruck erzeugbar ist,
**dadurch gekennzeichnet,**
**daß** aus der Entlüftungsleitung (3) hinter der Pumpeinrichtung (31) eine Bypassleitung (37) mit regelbarem Durchlaß zum Kurbelgehäuse (20) geführt ist.

2. Einrichtung nach Anspruch 1, **dadurch gekennzeichnet, daß** in der Bypassleitung (37) ein Regelventil (37') angeordnet ist, das nach Maßgabe des Drucks (p) im Kurbelgehäuse (20) verstellbar ist.

3. Einrichtung nach Anspruch 2, **dadurch gekennzeichnet, daß** das Regelventil (37') zusätzlich nach Maßgabe der Kurbelwellendrehzahl (n) der Brennkraftmaschine (2) und nach Maßgabe der Stellung (α) einer ggf. im Saugrohr (22) vorhandenen Drosselklappe (24) verstellbar ist.

4. Einrichtung nach einem der vorhergehenden Ansprüche, wobei im Saugrohr (22) eine Drosselklappe (24) angeordnet ist, **dadurch gekennzeichnet, daß** vom Saugrohr (22) vor der Drosselklappe (24) eine in das Kurbelgehäuse (20) führende Belüftungsleitung (4) mit einem Rückschlagventil (40) abgeht.

5. Einrichtung nach Anspruch 4, **dadurch gekennzeichnet, daß** die Entlüftungsleitung (3) vor der Drosselklappe (24) in das Saugrohr (22) mündet und daß von der Entlüftungsleitung (3) zwischen dem Ölnebelabscheider (30) und der Pumpeinrichtung (31) eine Zweigleitung (38) mit einem Regelventil (38') in ihrem Verlauf abgeht, die hinter der Drosselklappe (24) in das Saugrohr (22) mündet.

6. Einrichtung nach Anspruch 5, **dadurch gekennzeichnet, daß** das in der Zweigleitung (38) angeordnete Regelventil (38') nach Maßgabe des Drucks (p) im Kurbelgehäuse (20) verstellbar ist.

7. Einrichtung nach Anspruch 6, **dadurch gekennzeichnet, daß** das Regelventil (38') zusätzlich nach Maßgabe der Kurbelwellendrehzahl (n) der Brennkraftmaschine (2) und nach Maßgabe der Stellung (α) der Drosselklappe (24) verstellbar ist.

8. Einrichtung nach einem der Ansprüche 4 bis 7, **dadurch gekennzeichnet, daß** in der Belüftungsleitung (4) zusätzlich zu dem Rückschlagventil (40) ein mit diesem kombiniertes oder separates, fernbetätigbares Absperrventil (41) angeordnet ist.

9. Einrichtung nach Anspruch 8, **dadurch gekennzeichnet, daß** das Absperrventil (41) in der Belüftungsleitung (4) nach Maßgabe der Kurbelwellendrehzahl (n) der Brennkraftmaschine (2) verstellbar, insbesondere bei Leerlaufdrehzahl in Schließstellung bringbar, ist.

10. Einrichtung nach einem der Ansprüche 5 bis 9, **dadurch gekennzeichnet, daß** die Bypassleitung (37) von der Entlüftungsleitung (3) hinter der Pumpeinrichtung (31) über ein nach Maßgabe der Drosselklappenstellung (α) oder nach Maßgabe des Saugrohrdrucks vor der Drosselklappe (24) umschaltbares Abzweigventil (39') zum Kurbelgehäuse (20) geführt ist.

11. Einrichtung nach einem der vorhergehenden Ansprüche, **dadurch gekennzeichnet, daß** die Pumpeinrichtung (31) zwischen dem Ölnebelabscheider (30) und der Einmündung der Entlüftungsleitung (3) in das Saugrohr (22) angeordnet ist.

12. Einrichtung nach einem der vorhergehenden Ansprüche, **dadurch gekennzeichnet, daß** die Pumpeinrichtung (31) eine Saugpumpe oder ein Injektor ist.

13. Einrichtung nach Anspruch 12, **dadurch gekennzeichnet, daß** die die Pumpeinrichtung (31) bildende Saugpumpe ein Radialgebläse oder ein Seitenkanalverdichter mit einem von der Brennkraftmaschine (2) abgeleiteten mechanischen Antrieb oder mit einem Elektromotor (32) als Antrieb ist.

14. Einrichtung nach Anspruch 13, **dadurch gekennzeichnet, daß** dem die Saugpumpe als Pumpeinrichtung (31) antreibenden Elektromotor (32) ein elektrischer Schalter oder Spannungsregler (35) vorgeschaltet ist, der nach Maßgabe des Kurbelgehäusedrucks (p) verstellbar ist.

15. Einri.chtung nach Anspruch 12, **dadurch gekennzeichnet, daß** der die Pumpeinrichtung (31) bildende Injektor mit Druckluft von der Druckseite eines im Verlauf des Saugrohrs (22) angeordneten Turboladers der mit der Einrichtung (1) ausgestatteten Brennkraftmaschine (2) oder mit Druckluft aus einem Druckluftnetz eines mit der Einrichtung (1) ausgestatteten Kraftfahrzeugs betreibbar ist.

16. Einrichtung nach Anspruch 15, **dadurch gekennzeichnet, daß** in eine Druckluftzuleitung zum Injektor ein Regelventil eingeschaltet ist, das nach Maßgabe des Kurbelgehäusedrucks (p) verstellbar ist.

17. Einrichtung nach Anspruch 13 oder 15, **dadurch gekennzeichnet, daß** mit der Entlüftungsleitung (3) ein die Pumpeinrichtung (31) kurzschließender Umgehungskanal mit einem Regelventil verbunden ist, das nach Maßgabe des Kurbelgehäusedrucks (p) verstellbar ist.

18. Einrichtung nach einem der vorhergehenden Ansprüche, **dadurch gekennzeichnet, daß** die verstellbaren und schaltbaren Komponenten (37', 38', 39', 41) der Einrichtung (1) durch eine zur Brennkraftmaschine (2) gehörende, vorhandene Motorelektrik oder -elektronik betätigbar und überwachbar sind.

## Claims

1. A device (1) for the ventilation of the crankcase (20) of an internal combustion engine (2), comprising a vent line (3) running from the crankcase (20) to an intake pipe (22) of the internal combustion engine (2), with an oil-mist separator (30) being arranged in the course of the vent line (3), wherein a pump unit (31) is provided in the course of the vent line (3), said pump unit (3) being able to generate a vacuum pressure in the crankcase (20) that is negative in relation to the atmospheric pressure, **characterized in that**, downstream of the pump unit (31), a bypass line (37) with a controllable capacity is coming out of the vent line (3) and going to the crankcase (20).

2. A device according to Claim 1, **characterized in that** a regulating valve (37') is arranged in the bypass line (37), wherein said regulating valve (37') can be adjusted according to the pressure (p) in the crankcase (20).

3. A device according to Claim 2, **characterized in that** the regulating valve (37') can, in addition, be adjusted according to the crankshaft speed (n) of the internal combustion engine (2) and according to the position (α) of the throttle valve (24), if any is provided in the intake pipe (22).

4. A device according to anyone of the preceding claims, wherein a throttle valve (24) is arranged in the intake pipe (22), **characterized in that** a vent line (4) with a check valve (40) is branching off from the intake pipe (22) upstream of the throttle valve (24) and is running into the crankcase (20).

5. A device according to Claim 4, **characterized in that** the vent line (3) ends in the intake pipe (22) upstream of the throttle valve (24) and that a branch line (38) provided with a regulating valve (38') in its course branches off from the vent line (3) between the oil-mist separator (30) and the pump unit (31) and ends in the intake pipe (22) downstream of the throttle valve (24).

6. A device according to Claim 5, **characterized in that** the regulating valve (38') that is arranged in the branch line (38) can be adjusted according to the pressure (p) in the crankcase (20).

7. A device according to Claim 6, **characterized in that** the regulating valve (38') can, in addition, be adjusted according to the crankshaft speed (n) of the internal combustion engine (2) and according to the position (α) of the throttle valve (24).

8. A device according to anyone of Claims 4 to 7, **characterized in that** a remote-controllable shut-off valve (41) is arranged in the vent line (4) in addition to the check valve (40), either separately or in combination with the latter.

9. A device according to Claim 8, **characterized in that** the shut-off valve (41) in the vent line (4) can be adjusted according to the crankshaft speed (n) of the internal combustion engine (2) and can, in particular, be set to the closed position at idle speed.

10. A device according to anyone of Claims 5 to 9, **characterized in that**, downstream of the pump unit (31), the bypass line (37) that is coming from the vent line (3) is running to the crankcase (20) via a branching valve (39') that can be switched over upstream of the throttle valve (24) either according to the position (α) of the throttle valve or according to the pressure in the intake pipe.

11. A device according to anyone of the preceding claims, **characterized in that** the pump unit (31) is arranged between the oil-mist separator (30) and the point where the vent line (3) ends in the intake pipe (22).

12. A device according to anyone of the preceding claims, **characterized in that** the pump unit (31) is a suction pump or an injector.

13. A device according to Claim 12, **characterized in that** the suction pump that forms the pump unit (31) is a radial-flow blower or a side-channel sealer with a mechanical drive derived from the internal combustion engine (2) or with an electric motor (32) as drive.

14. A device according to Claim 13, **characterized in that** an electric switch or voltage regulator (35) is connected in series with and upstream of the electric motor (32) driving the suction pump (31) as pump unit (31), with this switch or regulator being adjustable according to the crankcase pressure (p).

15. A device according to Claim 12, **characterized in that** the injector forming the pump unit (31) can be operated with compressed air from the outlet side of a turbocharger arranged in the course of the intake pipe (22) and forming a part of the internal combustion engine (2) that is equipped with the device (1) or with compressed air from a compressed air system of a motor vehicle that is equipped with the device (1).

16. A device according to Claim 15, **characterized in that** a regulating valve is incorporated in a compressed air supply line running to the injector, wherein said regulating valve can be adjusted according to the crankcase pressure (p).

17. A device according to Claim 13 or 15, **characterized in that** a bypass duct is connected to a regulating valve together with the vent line (3), wherein said bypass duct short-circuits the pump unit (31) and said regulating valve can be adjusted according to the crankcase pressure (p).

18. A device according to anyone of the preceding claims, **characterized in that** the adjustable and switchable components (37', 38', 39', 41) of the device (1) can be actuated and monitored by existing motor electrics or motor electronics pertaining to the internal combustion engine (2).

## Revendications

1. Dispositif (1) pour le dégazage du carter de vilebrequin (20) d'un moteur à combustion interne (2), comprenant une conduite de dégazage (3) allant du carter de vilebrequin (20) vers un tuyau d'aspiration (22) du moteur à combustion interne (2), sur le tracé de laquelle est disposé un séparateur de brouillard d'huile (30), un dispositif de pompage (31) avec lequel peut être générée, dans le carter de vilebrequin (20), une dépression par rapport à la pression de l'air ambiant étant prévu sur le tracé de la conduite de dégazage (3), **caractérisé en ce qu'**une conduite de by-pass (37) à passage réglable va de la conduite de dégazage (3) en aval du dispositif de pompage (31) vers le carter de vilebrequin (20).

2. Dispositif selon la revendication 1, **caractérisé en ce qu'**est située, dans la conduite de by-pass (37), une soupape de réglage (37') qui est réglable selon la pression (p) dans le carter de vilebrequin (20).

3. Dispositif selon la revendication 2, **caractérisé en ce que** la soupape de réglage (37') est additionnellement réglable selon le régime (n) du vilebrequin du moteur à combustion interne (2) et selon la position (α) d'une vanne papillon (24) présente, le cas échéant, dans le tuyau d'aspiration (22).

4. Dispositif selon l'une des revendications précédentes, une vanne papillon (24) étant située dans le tuyau d'aspiration (22), **caractérisé en ce qu'**une conduite d'aération (4) comportant un clapet anti-retour (40) et allant dans le carter de vilebrequin (20) part du tuyau d'aspiration (22) en amont de la vanne papillon (24).

5. Dispositif selon la revendication 4, **caractérisé en ce que** la conduite de dégazage (3) débouche dans le tuyau d'aspiration (22) en amont de la vanne papillon (24) et **en ce que** part de la conduite de dégazage (3) entre le séparateur de brouillard d'huile (30) et le dispositif de pompage (31) une conduite de dérivation (38) comportant une soupape de réglage (38') sur son tracé, laquelle conduite de dérivation (38) débouche dans le tuyau d'aspiration (22) en aval de la vanne papillon (24).

6. Dispositif selon la revendication 5, **caractérisé en ce que** la soupape de réglage (38') située dans la conduite de dérivation (38) est réglable selon la pression (p) dans le carter de vilebrequin (20).

7. Dispositif selon la revendication 6, **caractérisé en ce que** la soupape de réglage (38') est additionnellement réglable selon le régime (n) du vilebrequin du moteur à combustion interne (2) et selon la position (α) de la vanne papillon (24).

8. Dispositif selon l'une des revendications 4 à 7, **caractérisé en ce qu'**est située, dans la conduite d'aération (4), en plus du clapet anti-retour (40), une soupape d'arrêt (41) actionnable à distance, combinée à celui-ci ou séparée de celui-ci.

9. Dispositif selon la revendication 8, **caractérisé en ce que** la soupape d'arrêt (41) dans la conduite d'aération (4) est réglable selon le régime (n) du vilebrequin du moteur à combustion interne (2), et est en particulier mettable en position de fermeture en régime de ralenti.

10. Dispositif selon l'une des revendications 5 à 9, **caractérisé en ce que** la conduite de by-pass (37) va de la conduite de dégazage (3) en aval du dispositif de pompage (31) vers le carter de vilebrequin (20) en passant par une soupape de dérivation (39') commutable en amont de la vanne papillon (24) selon la position de la vanne papillon (α) ou selon la pression du tuyau d'aspiration.

11. Dispositif selon l'une des revendications précédentes, **caractérisé en ce que** le dispositif de pompage (31) est situé entre le séparateur de brouillard d'huile (30) et l'embouchure de la conduite de dégazage (3) dans le tuyau d'aspiration (22).

12. Dispositif selon l'une des revendications précédentes, **caractérisé en ce que** le dispositif de pompage (31) est une pompe aspirante ou un injecteur.

13. Dispositif selon la revendication 12, **caractérisé en ce que** la pompe aspirante constituant le dispositif de pompage (31) est une soufflante radiale ou un compresseur à canal latéral avec un entraînement mécanique dérivé du moteur à combustion interne (2) ou avec un moteur électrique (32) en tant qu'entraînement.

14. Dispositif selon la revendication 13, **caractérisé en ce qu'**un commutateur ou régulateur de tension électrique (35) réglable selon la pression (p) du carter de vilebrequin est monté en amont du moteur électrique (32) entraînant la pompe aspirante en tant que dispositif de pompage (31).

15. Dispositif selon la revendication 12, **caractérisé en ce que** l'injecteur constituant le dispositif de pompage (31) peut fonctionner avec de l'air comprimé du côté refoulement d'un turbocompresseur du moteur à combustion interne (2) équipé du dispositif (1) et situé dans le tracé du tuyau d'aspiration (22) ou avec de l'air comprimé venant d'un réseau d'air comprimé d'un véhicule automobile équipé du dispositif (1).

16. Dispositif selon la revendication 15, **caractérisé en ce qu'**est montée, dans une conduite d'air comprimé allant vers l'injecteur, une soupape de réglage qui est réglable selon la pression (p) du carter de vilebrequin.

17. Dispositif selon la revendication 13 ou 15, **caractérisé en ce que**, avec la conduite de dégazage (3), un canal de by-pass court-circuitant le dispositif de pompage (31) est relié à une soupape de réglage qui est réglable selon la pression (p) du carter de vilebrequin.

18. Dispositif selon l'une des revendications précédentes, **caractérisé en ce que** les composants réglables et commutables (37', 38', 39', 41) du dispositif (1) sont actionnables et surveillables par une électrique ou électronique de moteur présente faisant partie du moteur à combustion interne (2).
